# EUROPEAN PATENT APPLICATION

(11) **EP 1 569 083 A2**
(43) Date of publication of application: **31.08.2005**
(21) Application number: 04029255.9
(22) Date of filing: 09.12.2004
(51) Int. Cl.: G06F 3/06, H04L 29/06

(54) **Storage system, computer system and a method of establishing volume attribute**

(30) Priority: 27.02.2004 JP 2004052703; 17.09.2004 JP 2004270671
(71) Applicant: Hitachi, Ltd., Tokyo (JP)
(72) Inventor: Fujita, Takahoiro c/o Hitachi, Ltd., 6-1, Marunouchi 1-chome Tokyo 100-8220 (JP); Miyazaki, Fumi c/o Hitachi, Ltd., 6-1, Marunouchi 1-chome Tokyo 100-8220 (JP); Kaneda, Yasunori c/o Hitachi, Ltd., 6-1, Marunouchi 1-chome Tokyo 100-8220 (JP)
(74) Representative: Strehl Schübel-Hopf & Partner

(57) **Abstract**

In order to store data in disk drives securely in an environment with a mixture of disk drives having write protection mechanisms and disk drives without write protection mechanisms, a different write protection mechanism must be checked for each of the disk drives, and write protection must be defined for each of the disk drives storing data to be saved, which may impose a large load on system administrators. There is provided a storage controller for performing data input/output processing from a computer by managing volumes of multiple storage subsystems as external volumes and by using these external volumes as virtual volumes. In the data input/output processing, write protection is achieved based on an access attribute set for each of the virtual volumes. When an access attribute is set for a virtual volume, the same access attribute is set for an external volume corresponding to the virtual volume. Thus, the write protection is achieved for the external volume corresponding to the virtual volume.

## Description

### BACKGROUND

The present invention is related to a method for centrally managing multiple storage apparatuses, and more specifically, a method for protecting data stored in a storage apparatus.

Technologies for connecting multiple computers and multiple storage apparatuses through a communication line (storage area network (SAN)) and centrally managing the multiple storage apparatus connected to the SAN have been widely spread.

With increasing size of electronic data, some data is now stored in storage apparatuses without archiving it on tapes. A technique for write protection to save data securely in the storage apparatus is publicly disclosed in JP-A-2002-334048.

### SUMMARY

With an increase in size of electronic data, required size of a volume is increased. Some data are stored in storage apparatus such as a disk array device rather than tapes which is comprised by storage system. Furthermore, more storage systems are added in a SAN. This will cause a mixture of new and old storage system in the SAN.

A newer storage system may have a write protection mechanism and access control mechanism while an older storage system may not have these mechanisms. Therefore, a mixture of storage system with these mechanisms and storage system without the mechanisms exists together in a SAN.

On the other hand, in order to use stored data such as a mail archive under the law place, the establishment and assurance of validity of evidence are required. In order to establish the validity of evidence, the technology as disclosed in JP-A-2002-334048 may be adopted. However, in order to store data in storage system securely and to establish the validity of evidence security in a SAN composed of storage system with different functions, the presence of write protection mechanisms and/or access control mechanisms must be checked for each storage system, and these mechanisms must be configured for each of the storage system storing data to be saved, which may impose a large load on system administrators.

It is difficult to prevent access including writing from computers trying invalid accesses to a storage system at a lower level by only suppressing access including writing from computers and other storage systems legally connected to a storage system at a higher level.

In order to solve at least any one of the problems, a storage system (hereinafter, referred to a storage subsystem) is characterized by including a first interface connected to an external apparatus, a second interface connected to another storage system (hereinafter, referred to the storage subsystem), and a control unit, wherein, if a volume storing data corresponding to a volume specified by an instruction for attribute setting in response to the instruction for the attribute setting for the volume, which can be recognized by the external apparatus, through the first interface is the other storage subsystem, the control unit gives an instruction for attribute setting to the other storage subsystem through the second interface.

The other features of the invention will be more apparent from the description of the present specification and appended drawings.

### BRIEF DESCRIPTION OF THE DRAWINGS

Fig. 1 is a configuration diagram of a computer system according to the embodiment of the invention.
Figs. 2A to 2D are diagrams each showing a management table managed by a storage subsystem 800.
Fig. 3 is a diagram showing a processing flow of a host input/output request program of the storage subsystem 800.
Fig. 4 is a diagram showing a processing flow of an attribute change request program of the storage subsystem 800.
Fig. 5 is a conceptual diagram of a computer system according to the embodiment of the invention.
Fig. 6 is a diagram showing a management table managed by the storage subsystem 600.
Fig. 7 is a diagram showing a processing flow of a host input/output request program of the storage subsystem 600.
Fig. 8 is a diagram showing a processing flow of attribute change processing of the storage subsystem 600.
Fig. 9 is a configuration diagram of a management computer according to Embodiment 2.
Fig. 10 is a diagram showing a processing flow of an attribute setting check processing of a management computer 300.
Fig. 11 is a diagram showing a GUI representing the agreement/disagreement of attributes of volumes.
Figs. 12A to 12D are diagrams each showing an access management table.
Fig. 13 shows a processing flow of an access control change request program of the storage subsystem 800.

### DESCRIPTION OF THE PREFERRED EMBODIMENTS

Various embodiments for invention will be described below.

### (Embodiment 1)

An embodiment of the invention will be described with reference to drawings.

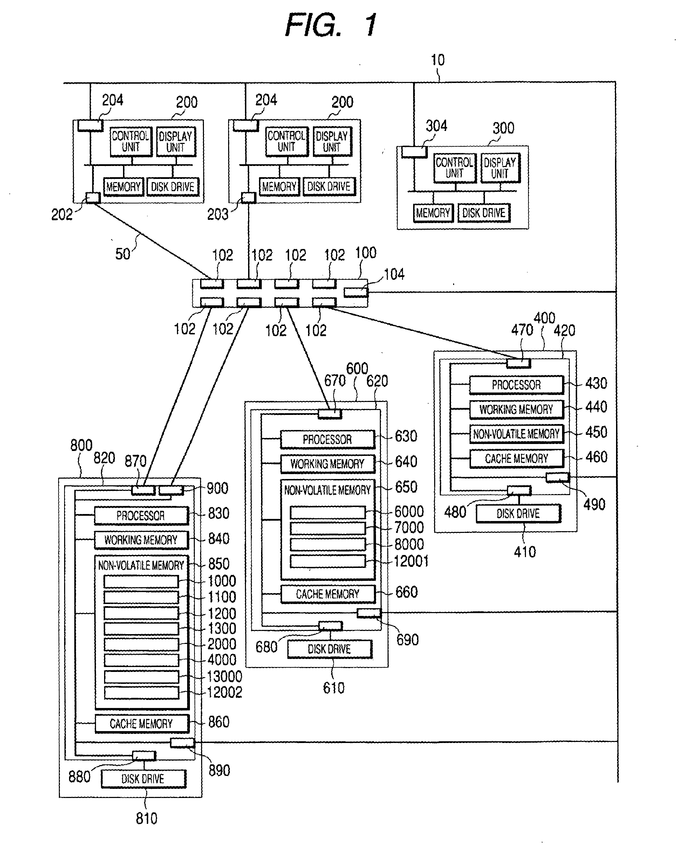

Fig. 1 shows a computer system 1, which is an embodiment of the invention.

The computer system 1 has host computers 200, a management computer 300, a Fibre Channel switch 100 and storage subsystems 400, 600 and 800. The host computers 200 and the storage subsystems 400, 600 and 800 are connected through the Fibre Channel switch 100. The host computers 200, the management computer 300 and the storage subsystem 400, 600 and 800 are connected with each other over a network 10.

The Fibre Channel switch 100 has interfaces 102 connecting to the host computers 200 and the storage subsystems 400, 600 and 800 and an interface 104 connecting to the network 10.

Here, the interfaces are referred to 202 and 203 for the distinction between the shown two host computers 200.

The Fibre Channel switch 100 selects the Fibre Channel interface 102 for connecting, to a data sender, the data to be received by the Fibre Channel interfaces 102 connecting to the interfaces of the host computers 200 and storage subsystems 400, 600 and 800 and sends the data thereto.

The host computer 200 has a control unit, a memory, a disk drive, a display unit, an interface 202 connecting to the Fibre Channel switch 100 and an interface 204 connecting to the network 10.

The management computer 300 has a control unit, a memory, a disk drive, a display unit and an interface 304 connecting to the network 10.

A network 50 is a Fibre Channel network and is a network connecting the computers 200 and the storage subsystems 400, 600 and 800. The network 10 is a local area network and is a management network by which the management computer 300 connects to the computers 200, the storage subsystems 400, 600 and 800 and the Fibre Channel switch 100 and exchanges data therewith. A same kind of network may be adopted as far as a management computer therein can manage devices within a computer system.

### (Storage Subsystem 400)

The storage subsystem 400 has a storage controller 420 and a disk drive 410.

The storage controller 420 has a processor 430, a working memory 440, a non-volatile memory 450, a cache memory 460, a Fibre Channel interface 470, a Fibre Channel interface 480 and a network interface 490, which are connected with each other.

The disk drive 410 has a piece of media and reads and writes data from/to the media in response to a request from the storage controller 420. The Fibre Channel interface 480 is connected to the disk drive 410.

The storage controller 420 inputs/outputs data from/to the disk drive 410 through the Fibre Channel interface 480. The interface may be an interface such as an ATA, a serial ATA, a parallel SCSI or a serial SCSI.

The storage controller 420 controls the disk drive 410 as a redundant RAID so as to improve the reliability and performance of the storage subsystem 400. The number of the disk drive 410 that the storage subsystem 400 has may be one or more than one.

A storage extent of the disk drive 410 is configured as a physical or logical storage extent (that is, a volume (storage extent) such as a physical volume or a logical volume and which will be called volume hereinafter) and is uniquely identified in at least the computer system 1 by a volume identifier thereof.

The input/output of data through the interface such as an ATA, a serial ATA, a parallel SCSI and a serial SCSI are performed on a logical storage extent provided by the disk drive. A request for input/output of data from/to the storage extent is processed at the disk drive as the one for writing/reading of data to/from the media.

The Fibre Channel interface 470 is connected to the Fibre Channel switch 100. The storage controller 420 receives data input/output requests from the host computers 200 and storage subsystem 800 connecting to the Fiber Channel switch 100 through the Fibre Channel interface 470. The data input/output request is performed on the volume. The network interface 490 is connected to the network 10.

The data transfer between the disk drive 410 and the storage controller 420 is slower than the data transfer within the storage controller 420. Therefore, the storage controller 420 improves the performance of data transfer by storing frequently accessed data on the cache memory 460.

The operation is achieved by executing a program, which is read from the non-volatile memory to the working memory by the processor. The processing of the program may be performed by dedicated hardware in the storage controller 420.

The storage controller 420 is a single processor here but may have a multiprocessor construction.

### (Storage Subsystem 600)

The storage subsystem 600 has an attribute change program 8000 in the non-volatile memory for each volume in addition to the features of the storage subsystem 400.

A storage controller 620 receives an access attribute setting request for a volume through a Fibre Channel interface 670 and a network interface 690.

Based on an access attribute defined for the volume, a processor 630 of the storage controller 620 returns a Write Denied to a Write Request from the computer 200 if a write protection attribute is defined thereto and executes Write if Write is allowed (refer to JP-A-2002-334048).

### (Volume Attribute Management Table)

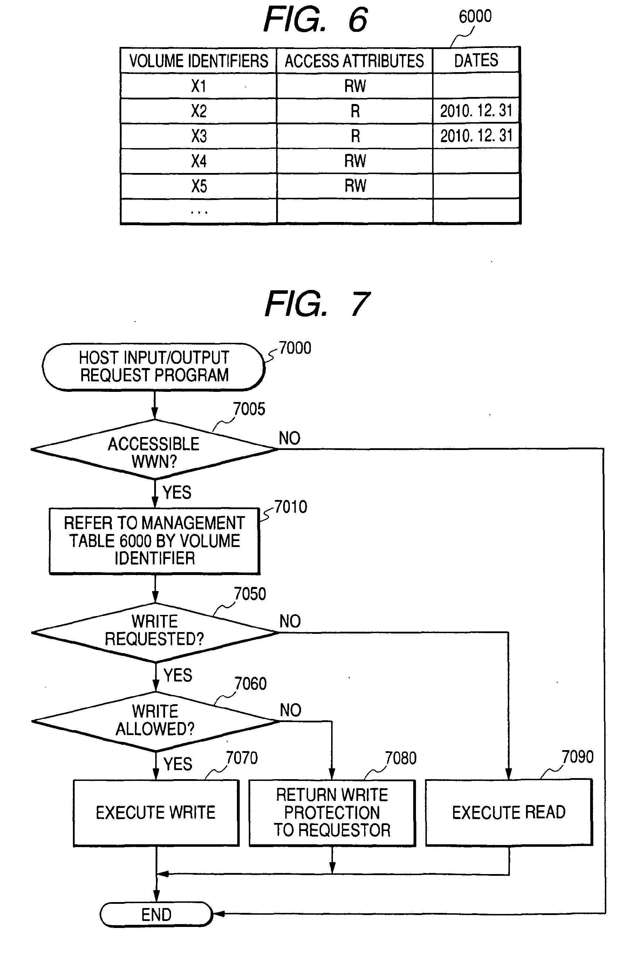

Fig. 6 is a diagram showing a volume attribute management table 6000 managing access attributes of volumes of the storage subsystem 600. The volume attribute management table 6000 is stored in the non-volatile memory 640 of the storage controller 600. Entries of the volume attribute management table 6000 exist for all of the volumes of the storage subsystem 600. An access attribute R for allowing reading only and an access attribute RW for allowing reading and writing are defined for each volume with a volume identifier for identifying the volume.

Furthermore, a period of time to maintain read-only (write protection) is provided as an access attribute. An access attribute according to embodiments disclosed herein is one of storage extent attributes defined for each of the storage extents.

### (Access Control)

According to this embodiment, storage subsystems and host computers are connected through Fibre Channel interfaces. Each of the Fibre Channel interfaces is identifiable by a unique identification number called a WWN (standing for WorldWide Name) . A data input/output request to be issued from a host computer to a storage subsystem includes a WWN of the Fibre Channel interface of the sender issuing the request and a WWN of the storage controller to execute the request. In response to the data input/output request, the storage controller may check the WWN of the request sender and if the WWN is not a predetermined WWN, the storage controller may not execute the data input/output request so that the storage controller can suppress illegal accesses. While, in this embodiment, the reference numerals given to the storage subsystems and host computers shown in the figures are WWNs, a WWN is a number including a vender identifier in accordance with an assignment rule therefor in reality. The each storage controller holds an access management table holding information on accessible WWN in a non-volatile memory.

### (Access Management Table)

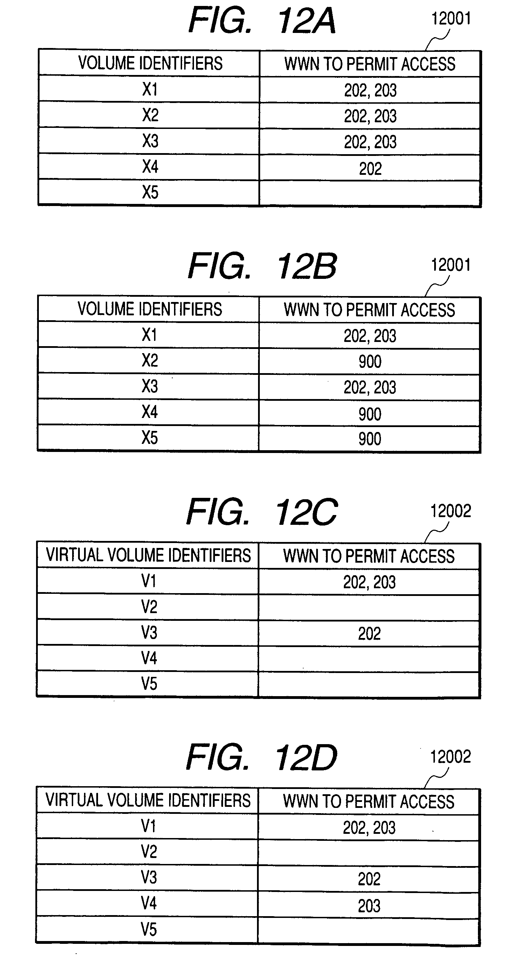

Figs. 12A to 12D show constructions of access management tables. Fig. 12A shows an access management table 12001 of the storage subsystem 600. The access management table 12001 shows, in a table form, accessible WWN to each of volumes indicated by volume identifiers thereof. In Fig. 12A, volumes X1, X2, and X3 are accessible by both of the WWN 202 and WWN 203, and the volume X4 is only accessible by the WWN 202. No access control is set for the volume X5 (indicated by the blank space (Null) in the ACCESSIBLE WWN field). In other words, the volume X5 is accessible by all interfaces having WWNs.

### (Input/Output Request Processing)

Access control for a data input/output request from the computer 200 for a volume of the storage subsystem 600 will be described with reference to Fig. 7.

In host input/output request processing 7000, in response to a data input/output request from the computer 200 through the Fibre Channel interface 670, the processor 630 of the storage controller 620 reads an access attribute setting program from the non-volatile memory and starts read/write processing. First of all, a WWN of a sender is obtained from the data input/output request and determines whether the obtained WWN is an accessible WWN or not (step 705). If the request is from a Fiber Channel interface having an inaccessible WWN, no read/write processing is performed, and the host input/output request processing 7000 ends. If the obtained WWN is an accessible WWN, the processor 630 of the storage controller 620 refers to the volume attribute management table 6000 based on an identifier of a requested volume (step 7010).

Next, the processor 630 checks the data input/output request from the host computer 200 (step 7050) . In the case that the request is a Write request and if the access attribute of the volume referred at the step 7010 is RW allowing Read and Write (step 7060), the processor 630 performs Write on the volume (step 7070) and ends the processing. If the request is not a Write request at the step 7050, the processor 630 performs Read thereon (step 7090) and ends the processing.

If the access attribute of the volume is R allowing Read only at the step 7060, the processor 630 returns the inhibition of Write to the requesting computer 200 (step 7080) and ends the processing.

As described above, a data input/output request from the computer 200 for a volume of the storage subsystem 600 is controlled based on an access attribute in the volume attribute management table 6000.

According to this embodiment, R (Read) allowing reading only and RW (Read/Write) allowing reading and writing are defined as access attributes.

### (Storage Subsystem 800)

The storage subsystem 800 has a storage controller 820 and a disk drive 810.

The storage controller 820 has a processor 830, a working memory 840, a non-volatile memory 850, a cache memory 860, a Fibre Channel interface 870, a Fibre Channel interface 880, a network interface 890 and a Fibre Channel interface 900, which are connected to each other.

The disk drive 810 has a piece of media and reads and writes data from/to the media in response to a request from the storage controller 820.

The non-volatile memory 850 stores various programs of a virtual volume management table 1200, an internal volume management table 1100, an external volume 1200, an attribute settability table 1300, a host input/output request program 2000, an attribute change request program 4000 and/or the like. These programs may be loaded to the memory 360 on starting the storage subsystem and may be executed, or processing of the programs may be constructed by hardware in the storage subsystem.

The Fibre Channel interface 880 is connected to the disk drive 810. The storage controller 820 input/outputs data from/to the disk drive 810 through the Fibre Channel interface 880. The interface may be an interface such as an ATA, a serial ATA, a parallel SCSI, and a serial SCSI. The number of the disk drive 810 that the storage subsystem 800 has may be one or more than one.

The storage controller 820 improves the performance of data transfer by the cash memory 860 and improves the reliability and performance by controlling the disk drive 810 as a RAID. The number of the disk drive 810 may be one or more than one. The storage controller 820 is a single processor here but may have a multiprocessor construction.

A storage extent of the disk drive 810 is defined as a physical or logical storage extent (that is, a volume such as a physical volume or a logical volume and which will be called internal volume hereinafter) and is uniquely identified in at least the storage subsystem 800 based on an internal volume identifier thereof that the storage controller 820 assigns. In response to a request from the computer, data writing/reading is performed on data stored in the internal volumes through the storage controller 820.

The network interface 890 is connected to the network 10. The storage subsystem 800 receives a request for external volume setting and/or a request for sending data, which is stored in the non-volatile memory, from the management computer 300 through the network interface 890. The Fibre Channel interface 900 is connected to the Fibre Channel switch 100.

The storage controller 820 inputs/outputs data from/to the volumes of the storage subsystems 400 and 600 through the Fibre Channel interface 900. The volumes of the disk drives of the storage subsystems 400 and 600 outside of the storage subsystem 800 are especially called external volumes with respect to the internal volumes in the storage subsystem 800. The external volumes are identified by respective external volume identifiers. The external volume setting is performed by a system administrator by using the management computer 300 and setting an external volume to be used by the storage controller 820.

In the storage controller 820, a storage extent corresponding to the internal volumes and external volumes is defined. The storage extent (called virtual volume hereinafter) can be recognized from external apparatus. The storage controller 820 receives an input/output request and/or access attribute setting request for the virtual volume from the external apparatus of the computer 200 through the Fibre Channel interface 870.

The Fibre Channel interface 870 is connected to the Fibre Channel switch 100. The storage controller 820 receives a data input/output request for the virtual volume from the host computer 200 connecting to the Fibre Channel switch 100 through the Fibre Channel interface 870. The storage controller 820 receives an access attribute setting request for the virtual volume through the Fibre channel interface 870 and the network interface 890.

### (Internal Volume Management Table)

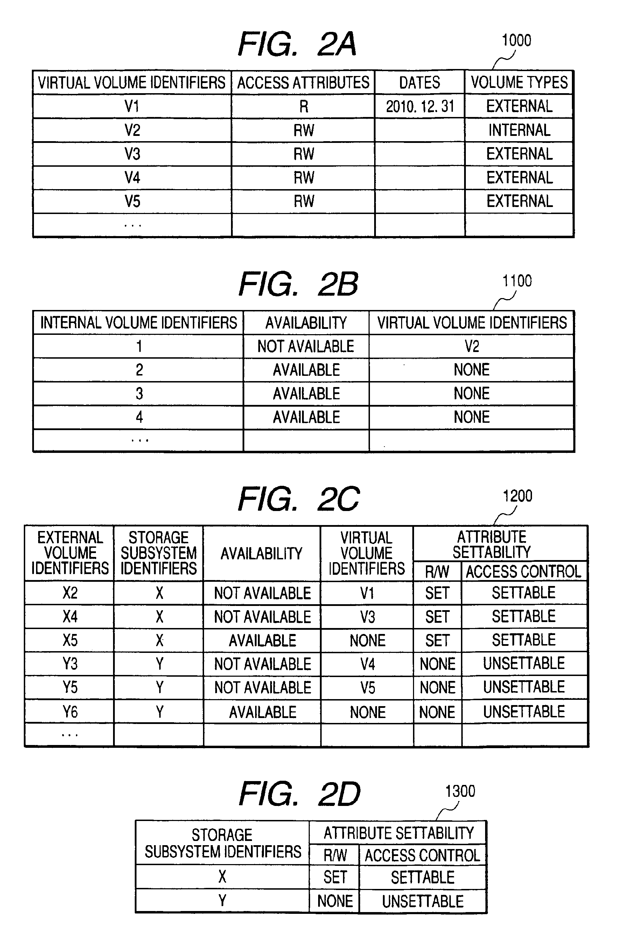

Fig. 2 includes Fig. 2A showing a virtual volume management table 1200, Fig. 2B showing an internal volume management table 1100, Fig. 2C showing an external volume 1200 and Fig. 2D showing an attribute settability table 1300, which are stored in the non-volatile memory of the storage controller 820.

The internal volume management table 1100 shown in Fig. 2B has settings of an availability indicating whether a virtual volume is defined for a given volume, which is a storage extent within the disk drive 810, and a virtual volume identifier indicating the virtual volume. When a virtual volume corresponding to a given internal volume is not defined, the availability is "available" and the volume identifier is "none".

### (External Volume Management Table)

Next, management of an external volume will be described.

The external volume management table 1200 is defined by a system administrator by registering an external volume to be used by the storage controller 820 with the management computer 300.

Fig. 2C is a diagram showing the external volume management table 1200. The external volume management table 1200 has, for each external volume registered by a system administrator, items including a storage subsystem identifier indicating a storage subsystem that has the volume, an availability indicating whether a virtual volume is set for the virtual volume corresponding to the volume or not, a virtual volume identifier indicating the corresponding virtual volume and an attribute settability indicating whether an access attribute can be set for the volume or not. These items can be registered and set by the storage controller 820 of the storage subsystem 800 in response to an instruction of a selection of volumes of the storage subsystems 400 and 600 by the system administrator through the management computer 300 to the storage subsystem 800.

Once an external volume is registered, the storage controller 820 defines an identifier of the selected volume in the external volume management table 1200. The storage controller 820 defines the identifier of the storage subsystem having the external volume as a storage subsystem identifier. The storage controller 820 sets the availability at "available" and sets the virtual volume identifier at "none". In accordance with the access attribute settability for the external volume, the attribute settability is set.

Fig. 2D is a diagram showing the attribute settability table 1300. The attribute settability setting table 1300 has, for each storage subsystem, an item of attribute settability indicating whether access attributes (R/W and access control) can be defined or not.

According to this embodiment, an access attribute for reading only (write protection) can be set for a storage subsystem having an identifier X since the R/W attribute settability is "settable". On the other hand, an access attribute for write protection cannot be set for a storage subsystem having an identifier Y since the R/W attribute settability is "not settable".

An access control can be set for the storage subsystem having the identifier X since the access control attribute settability is "settable". On the other hand, an access control cannot be set for the storage subsystem having the identifier Y since the access control attribute settability is "not settable".

According to this embodiment, some storage subsystems may have an access attribute setting function. With reference to the attribute settability table 1300 based on a storage subsystem identifier, the attribute settability for a given external volume is set. For example, when an external volume X5 that a storage subsystem X has is registered and is set, the storage subsystem 800 sets the attribute settability of the external volume X5 of the external volume management table 1200 at "settable" with reference to the attribute settability of the storage subsystem X from the attribute settability table 1300.

The access attribute described above is one of storage extent attributes which is configurable for each storage extent respectively.

### (Virtual Volume Attribute Management Table)

The virtual management table 1000 shown in Fig. 2A has, for each virtual volume which is a storage extent that the computer 200 can recognize, items including a virtual identifier, an external access attribute and a volume type indicating whether a volume storing data is within the storage subsystem 800 or in the external storage subsystem 400 or 600 with respect to an external access to a virtual volume.

A system administrator sets, through the management computer 300, a virtual volume for an internal volume by newly creating a virtual volume as a volume that the computer 200 can recognize and associating the created virtual volume with an available internal volume. Once the virtual volume is created, the storage controller 820 creates a virtual volume identifier therefor and stores the virtual volume identifier in the virtual volume management table 1000. Here, the access attribute of the virtual volume is set to Read/Write (RW), and the volume type indicating whether the virtual volume corresponds to an internal volume or an external volume is set to "Internal". Furthermore, the availability of the internal volume corresponding to the virtual volume in the internal volume management table 1100 is set to "Not Available". The identifier of the virtual volume is set as the virtual volume identifier.

Like an internal volume, a system administrator sets, through the management computer 300, a virtual volume for an external volume by newly creating a virtual volume and associating the created virtual volume with an available external volume.

Once the virtual volume is created, a virtual volume identifier thereof is created in the storage controller 820 and is stored in the virtual volume management table. Here, the access attribute of the virtual volume is set to Read/Write (RW), and the volume type indicating whether the virtual volume corresponds to an internal volume or an external volume is set to "External". Furthermore, the availability of the external volume corresponding to the virtual volume in the external volume management table 1200 is set to "Not Available". The identifier of the virtual volume is set as the virtual volume identifier.

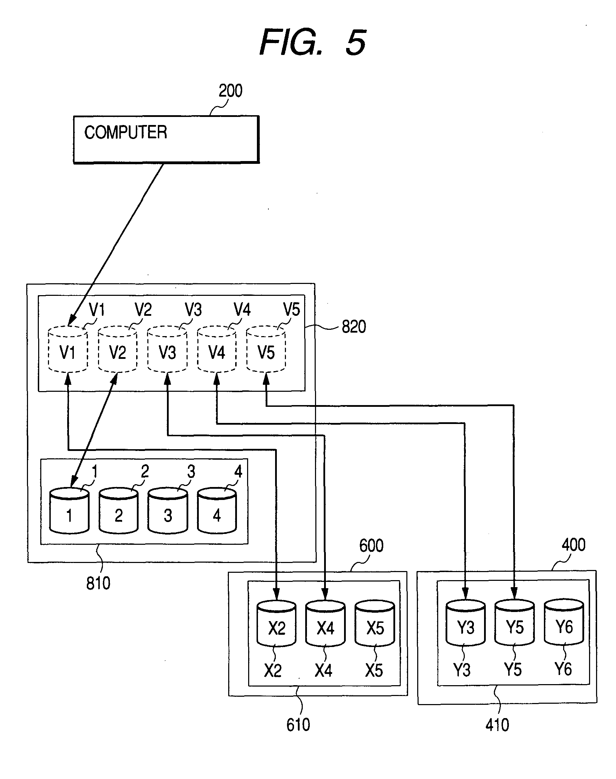

Next, a relationship among a virtual volume, an internal volume and an external volume will be described more specifically with reference to Fig. 5. A storage extent V1 (virtual volume) corresponding to an external volume X2 of the storage subsystem 800 can be recognized from the computer 200, which is an external apparatus, and cannot hold data. The storage extent X2 of the storage subsystem 600 at a lower level stores and holds data. For example, in response to a write request from the computer 200 for the storage extent V1, the storage controller 820 requests the storage subsystem 600 to write data having been transmitted from the computer 200 into the storage extent X2 of the storage subsystem 600 at the lower level. The storage subsystem 600 at the lower level stores data in the storage extent X2 . In response to a reading request for the storage extent V1 from the computer 200, the storage controller 820 reads data from the storage extent X2 of the storage subsystem 600 storing data and obtains the data therefrom. Then, the storage controller 820 transmits the data to the computer 200. The computer 200 recognizes that the storage extent X2 in the storage subsystem 600 at the lower level is the storage extent V1, which is a virtual storage extent (virtual volume) of the storage subsystem 800 at the higher level. In response to a write request for a storage extent V2, which can be recognized by the computer 200, from the computer 200, the storage controller 820 stores data having been transmitted from the computer 200 in the storage extent X2 (internal volume) of the disk drive 810 that the storage subsystem 800 itself has. The shown storage extents V1 to V5 are storage extents (virtual volumes) having virtual volume identifiers V1 to V5, respectively, according to this embodiment. The reference numerals X2, X4, X5, Y3, Y5 and Y6 refer to storage extents (external volumes) having external volume identifiers X2, X4, X5, Y3, Y5 and Y6, respectively. Storage extents 1, 2, 3, 4 and 5 are storage extents (internal volumes) of the storage subsystem 800, which correspond to internal volume identifiers 1, 2, 3, 4 and 5.

### (Access Control Setting)

According to this embodiment, the storage subsystems 400 and 600 are connected to the storage subsystem 800, and the volumes of the storage subsystems 400 and 600 are used as external volumes of the storage subsystems 800. This setting is performed through the management computer 300, and access control using WWNs may be performed in conjunction with the setting. According to this embodiment, the storage subsystems 800 and 600 have an access control function while the storage subsystem 400 does not have the access control function.

In other words, a WWN of the Fiber Channel interface 900 of the storage subsystem 800 is set as an access control target through the management computer 300 for a volume of the storage subsystem 600, which is set as an external volume of the storage subsystem 800. This setting allows the volume assigned as the external volume to process data input/output requests only from the WWN "900". Because of the setting only allowing the WWN 900 of the storage subsystem 800 to access the storage subsystem 600, even when an apparatus such as a host computer and a storage subsystem excluding the storage subsystem 900 issues a data input/output request for a volume of the storage controller 600, which has been already set as an external volume, no accesses to the volume from host computers and external apparatus having Fiber Channel interfaces excluding the one having the WWN "900" are allowed. Thus, invalid accesses from other apparatus excluding the storage subsystem 900 can be prevented.

In order to provide strict access control, while this embodiment includes the method of setting access control in setting an external volume, the access control may not be set when an external volume is set. The access control for the storage subsystem 600 may be set when access control is set for the storage subsystem 800. For example, access control is set for the external volume X2 of the storage subsystem 600, which is the substance of the virtual volume V1 when access control is set for the virtual volume V1 of the storage subsystem 800 as shown in Fig. 12C, for example. Therefore, as shown in Fig. 12B, the WWN "900" of the storage subsystem 800 may be set in the "WWN TO PERMIT ACCESS" field corresponding to X2 in the access management table 12001.

### (Access Management Table)

Fig. 12B shows a changed construction of the access management table of the storage subsystem 600. The access management table is the access management table 12001 of the storage subsystem 600 when the volumes X2, X4 and X5 are used from the storage subsystem 800 as virtual volumes. The WWN "900" is accessible to the captured volumes X2, X4 and X5 . Thus, the volumes X2, X4 and X5 can be only accessible from the storage subsystem 800.

As shown in Fig. 2C, the access control fields of the external volume management table 1200 hold whether access control is set or not. Here, access control is set for X2, X4 and X5.

Next, Fig. 12C shows a construction of the access management table 12002 of the storage subsystem 800. While the storage subsystem 800 has virtual volumes identifiable by virtual volume identifiers V1 to V5, V1 and V3 are assigned to X2 and X4, respectively, as shown in Fig. 2C. In this case, since X5 is not used, no virtual volume identifier is assigned thereto.

When the construction is changed, the management computer 300 obtains and rewrites the access management table 12001 of the storage subsystem 600 as shown in Fig. 12B. The management computer 300 further rewrites the access management table 12002 of the storage subsystem 800 as shown in Fig. 12C. Then, as shown in Fig. 12C, the WWNs "202" and "203" having been set for X2 of the storage subsystem 600 are set for the virtual volume V1, and the WWN "203" having been set for X4 of the storage subsystem 600 is set for the virtual volume V3. Since the volume X5 of the storage subsystem 600 is not used, no WWN appears in the access management tables. When the host computer 200 uses the volume X5, a virtual volume identifier Vn must be assigned to the volume X5 by the management computer 300, and the WWN accessible to the Vn must be set in the access management table 12002. The access management tables in the storage subsystem 600 does not have to be rewritten based on the access control for the Vn in particular. This is because, as shown in Fig. 12B, the volume X5 has been already set accessible only from the storage subsystem 800.

### (Input/Output Request Processing)

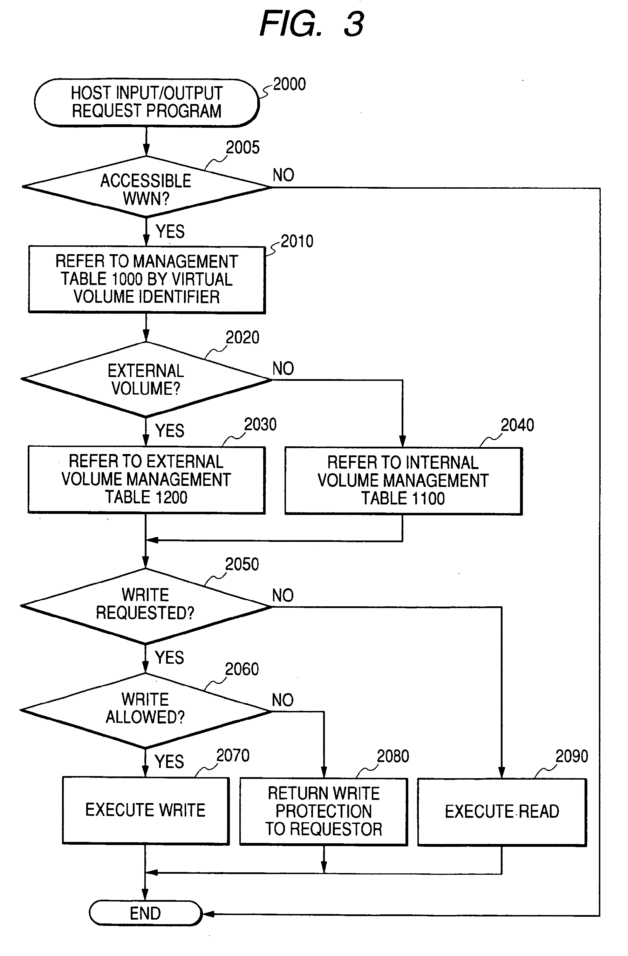

Next, access control over a data input/output request for the virtual volume, which is defined in the above-described manner, from the computer 200 will be described with reference to Fig. 3.

When the processor 830 of the storage controller 820 receives a data input/output request from the computer 200 through the Fibre Channel interface 870, a host input/output request program 2000 is read from the non-volatile memory 850 and is executed.

First of all, the processor of the storage controller 820 obtains a sender's WWN from a data input/output request and determines whether the sender's WWN is an accessible WWN or not (step 2005) with reference to the access management table. If the data input/output request is a request from a Fiber Channel interface having an inaccessible WWN, no read/write processing is performed, and the host input/output request program 2000 ends. Under the access control, if the obtained WWN is an accessible WWN, the processor of the storage controller 820 refers to the virtual volume attribute management table 1000 based on an identifier of a requested virtual volume (step 2010).

The volume type of the virtual volume is checked (step 2020). If the virtual volume is an external volume, the external volume management table 1200 is referred and an identifier of the external volume corresponding to the virtual volume is obtained (step 2030).

If the volume type of the virtual volume is an internal volume, the internal volume management table 1100 is referred and an identifier of the internal volume corresponding to the virtual volume is obtained (step 2040).

Next, a data input/output request from the host computer 200 is checked (step 2050) . If the request is a Write request and if the access attribute of the virtual volume referred at the step 2010 is RW allowing Read and Write (step 2060), Write is executed (step 2070) on the external volume obtained at the step 2030 or on the internal volume obtained at the step 2040. Then, the processing ends.

If the request is not a Write request at the step 2050, Read is executed (step 2090). Then, the processing ends.

If the access attribute of the virtual volume is R permitting Read only at the step 2060, the inhibition of Write is returned to the requesting computer 200 (step 2080) . Then, the processing ends.

As described above, a data input/output request for a virtual volume of the storage subsystem 800 from the computer 200 is controlled based on the access attribute of the virtual volume attribute management table 1000.

According to this embodiment, R (Read) permitting reading only by a computer or RW (Read/Write) permitting reading and writing by a computer is set as an access attribute.

### (Attribute Change Processing)

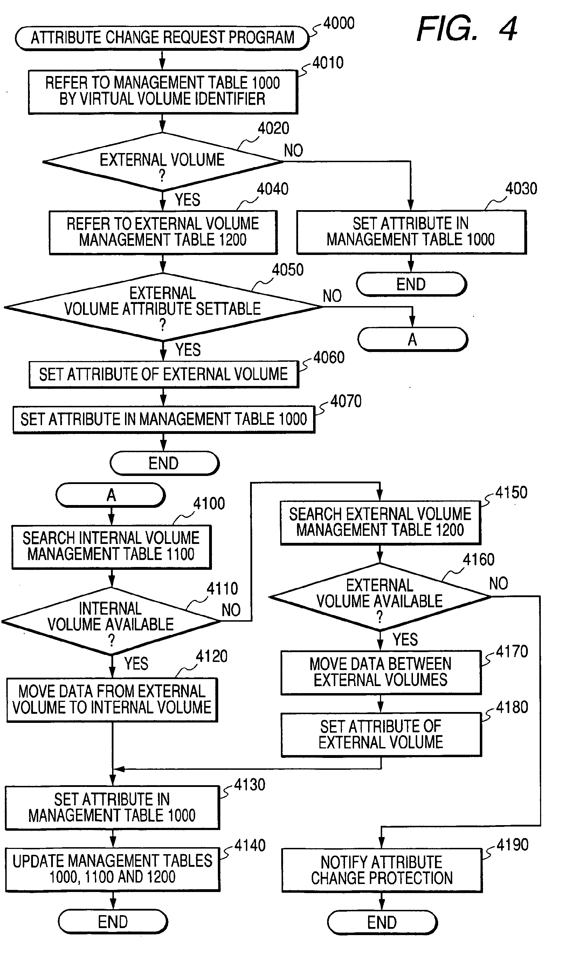

Next, a change of an access attribute of a virtual volume will be described with reference to Fig. 4.

In response to an access attribute change request from the computer 200 through the Fibre Channel interface 870, the processor 830 of the storage controller 820 reads and executes the attribute change request program 4000 from the non-volatile memory 850. The access attribute change requests may be for requesting to set a different access attribute from a current access attribute and/or for requesting to set a same access attribute as a current access attribute.

The storage controller 820 refers to the virtual volume attribute management table 1000 based on an identifier of a requested virtual volume (step 4010).

Here, access attributes include at least a write-protection attribute and an attribute indicating a period of write protection.

As a result of the reference, the volume type of the virtual volume is checked (step 4020) . If the virtual volume is not an external volume (that is, the virtual volume is an internal volume), the attribute of the virtual volume attribute management table 1000 is set based on the request (step 4030). Then, the processing ends.

If the volume type of the virtual volume is an external volume, the processor 830 refers to the external volume management table 1200 (step 4040) and checks the attribute settability of the external volume corresponding to the virtual volume (step 4050).

If the attribute of the external volume is settable, an instruction to set a same attribute as the attribute for the virtual volume is given to a storage subsystem having the external volume through the Fibre Channel interface 900. That is, an instruction for attribute setting is given to the storage subsystem having the external volume (step 4060) . The attribute in the virtual volume attribute management table 1000 is set based on the request (step 4070), and the processing ends. After the setting, the completion of the attribute setting may be notified to the host computer 200.

For example, the processor 830 extracts access attribute information included in the received access attribute change request and creates an instruction for attribute setting to the storage subsystem having the external volume at the step 4060.

If the attribute of the external volume is not settable at the step 4050, the processor 830 searches an available internal volume in the internal volume management table 1100 (step 4100) and checks whether any internal volume is available (step 4110).

If an internal volume is available, data is moved from the external volume to the available internal volume found at the step 4110 (step 4120) . Then, an attribute in the virtual volume attribute management table 1000 is set based on the request (step 4130), and the virtual volume attribute management table 1000, the internal volume management table 1100 and the external volume management table 1200 are updated (step 4140). Then, the processing ends.

The data movement at the step 4120 is data-copying to be performed by reading data from the external volume and writing the data read from the external volume into the internal volume. After the writing, an instruction to delete the data is given to the external storage subsystem. The storage subsystem having been instructed to delete (that is, the storage subsystem 600 in this embodiment) deletes the data by writing zero (0) into all extents of the volume.

If no internal volume is available at the step 4110, the processor 830 searches an available external volume in the external volume management table 1200 (step 4150) and checks whether any external volume is available and is allowed for attribute setting (step 4160).

If an external volume is available, data is moved from the external volume to the available external volume found at the step 4160 (step 4170). The same attribute as the attribute set for the virtual volume is set for the storage subsystem having the external volume to which the data has been moved (step 4180). An attribute in the virtual volume attribute management table 1000 is set based on the request (step 4130), and the virtual volume attribute management table 1000, the internal volume management table 1100 and the external volume management table 1200 are updated (step 4140). Then, the processing ends.

If no external volume is available at the step 4160, the attribute change protection is notified to the requesting host computer 200 (step 4190). Then, the processing ends.

For example, when a virtual volume is created and an access attribute of a virtual volume is set at Read/Write (RW), the storage controller 820 performs the attribute change processing 4000 on the created virtual volume.

According to the above-described embodiment, the access attribute requested from the computer 200 can be reflected on the setting of the access attribute of data stored in the storage subsystem connecting to the multiple computers through the Fibre Channel switch. Illegal accesses from computers to a storage extent storing data through the Fibre Channel switch can be prevented.

When a change request is made again for a volume having been already processed by the attribute change request program, the instruction may be given to the external storage subsystems 400 and/or 600 without performing the step 4050.

When the step 4050 results in NO, proccesor830 of the storage subsystem 800 may perform the step 4150 without performing the step 4110. On the other words. when the step 4050 results in NO, data may be moved from the external volume to the available external volume found at the step 4160 (step 4170) without step4110.

When host computer 200 gives to the storage subsystem 800 an instruction for identifying a virtual volume and archiving, proccesor830 of the storage subsystem 800 may perform setting of an access attribute for write protection according to Fig.4.

When storage subsystem 800 monitors the frequency of write request and find a virtual volume which has not been received write request, proccesor830 of the storage subsystem 800 may perform setting of an access attribute for write protection of that virtual volume according to Fig.4.

Step 4120 and/or step4170 migrate (move) the data according to their perceived value to appropriate real volume, which is settable to write protection for example, to meet performance, and/or regulatory compliance.

As the example of the archived data, not only mail data but also application data related to mission critical data such as statement data of accounts. The format of archived data is pdf (portable document format) for example.

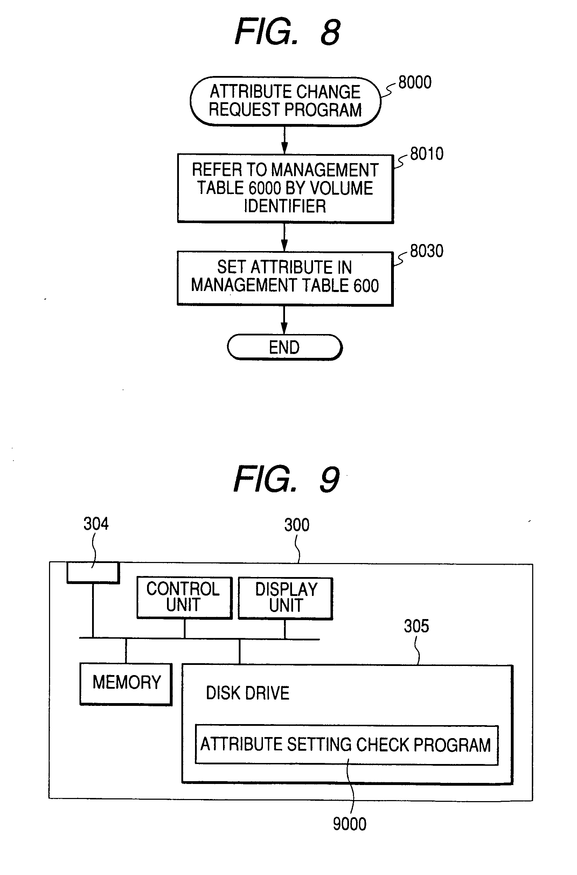

The setting of an access attribute for a volume to be performed when the storage subsystem 600 receives an instruction for the attribute setting from the storage subsystem 800 through the Fibre Channel switch 100 at the step 4060 will be described with reference to Fig. 8.

In response to an instruction for access attribute setting from the storage subsystem 800 through the Fibre Channel interface 670, the attribute change program 8000 is executed by the processor 630 of the storage controller 620.

The processor 630 of the storage controller 620 refers to the volume attribute management table 6000 based on an identifier of a requested volume (step 8010).

The processor 630 sets the attribute in the volume attribute management table 6000 based on the request (step 8030), and the processing ends. At the step 4180, an instruction for attribute setting is given in the same processing to a storage subsystem having been instructed for attribute setting from the storage subsystem 800.

Like the above-described embodiment, a storage subsystem at a higher level centrally manages storage extents of multiple storage subsystems at a lower level so that easier rearrangement of the storage extents can be achieved and the load on a system administrator can be reduced. Not only writing from a computer legally connected to the storage controller to a virtual volume can be suppressed but also the data tempering by direct illegal writing access to storage extents of the storage subsystem corresponding to the virtual volume can be prevented by only setting the write protection for the virtual volume. Thus, the consistency in system setting can be assured, and the validity of evidence of stored data can be improved.

According to this embodiment, an access attribute change request for a virtual volume of the storage controller 820 is made by the host computer 200 through the Fibre Channel interface 870. However, the access attribute change request may be made by the computer 200 or the management computer 300 through the network interface 890. In response to an access attribute change request from the management computer 300, and when the step 4050 results in NO, the processor 830 of the storage subsystem 800 may notify the fact to the management computer 300. By receiving the notification, a system administrator using the management computer 300 may recognize a change in configuration of multiple storage subsystems quickly.

According to this embodiment, the upper storage subsystem holds the external volume management table 1200 so that attributes of storage extents of a lower storage subsystem can be managed. However, when the step 4020 results in an external volume, the storage subsystem 800 may inquire of the lower storage subsystem 400 or 600 whether an attribute in accordance with an attribute setting instruction from the requesting host computer 200 can be set in the storage subsystem having the external volume. Based on the response, the determination at the step 4050 may be performed.

The data migration from an external volume to an internal volume may be performed in consideration of the presence of access control in addition to an R/W attribute thereof. In other words, when a storage subsystem holding an external volume does not have access control, there is a danger that accesses can be executed from an unspecific host computer. The data migration can avoid the danger. When no access control is set for a volume to be defined as an external volume, data may be migrated from the external volume to an internal volume. Alternatively, data may be migrated from the external volume to a storage subsystem (which is the storage subsystem 600 or 800 in this embodiment) for which access control can be set to set access control for the storage subsystem. Thus, accesses from unspecific host computers and storage subsystems can be prevented.

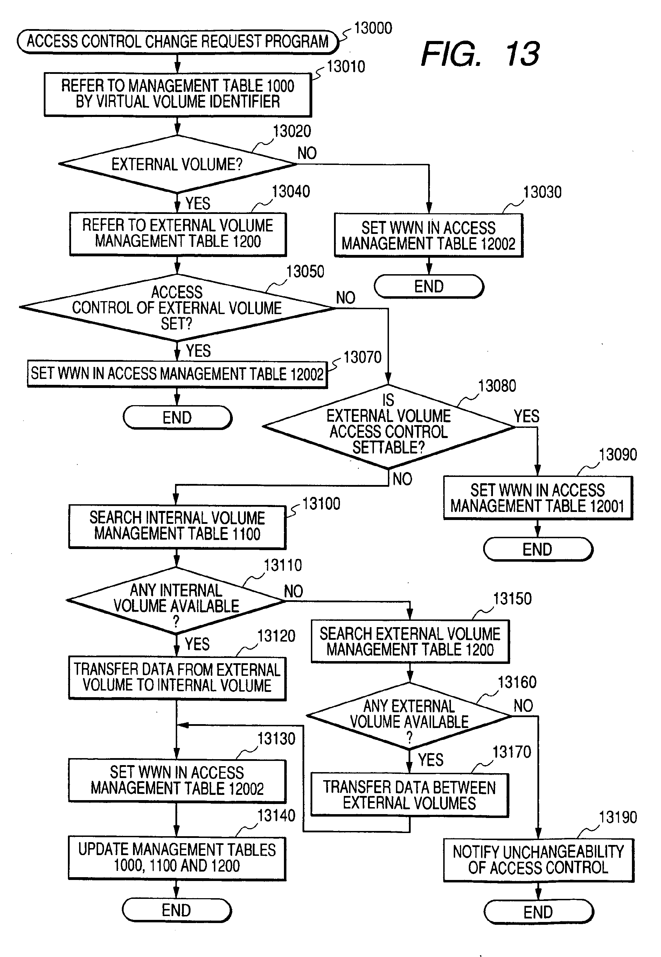

Details of access control change processing will be described with reference to the flowchart in Fig. 13. In response to an access control change request from the host computer 200 or the management computer 300, the processor 830 of the storage controller 820 reads and executes an access control change request program 13000 from the non-volatile memory 850.

The storage controller 820 refers to the virtual volume attribute management table 1000 based on an identifier of a requested virtual volume (step 13010).

The storage controller 820 checks a volume type of the virtual volume as a result of the reference (step 13020). If the volume type is not an external volume (that is, if the volume type is an internal volume), an accessing WWN accessible to the requested virtual volume on the access management table 12002 is set (step 13040) . Then, the access control change request program 13000 ends.

If the volume type of the virtual volume is an external volume, the processor 830 refers to the external volume management table 1200 (step 13040) and checks whether access control has been set for the external volume corresponding to the virtual volume or not (step 13050).

If the access control has been set therefor, the access control management table 12002 is set (step 13070) and the access control change request program 13000 ends. After the setting, the storage controller 820 may notify the fact that the setting of access control has completed to the host computer or management computer having requested the setting.

If access control has not been set at the step 13050, the processor 830 checks whether access control can be set for the external volume or not with reference to the attribute settability table 1300 (step 13080). If access control can be set for the external volume, the processor 830 sends an instruction to the storage controller 620 for rewriting the access management table 12001 and setting access control therefor (step 13090). The processor 630 of the storage controller 620 rewrites the access management table 12001 based on the instruction, and the access control change request program 13000 ends.

If access control has not been set for the external volume and access control cannot be set therefor at the step 13080, the processor 830 searches an available volume in the internal volume management table 1100 (step 13100) and checks whether any internal volume is available or not (step 13110) .

If an internal volume is available, the processor 830 migrates data from the external volume to the available internal volume found at the step 13110 (step 13120). Then, the processor 830 updates the access management table 12002 (step 13130) and updates the virtual volume attribute management table 1000, the internal volume management table 1100 and the external volume management table 1200 (step 13140) . Then, the access control change request program 13000 ends.

If no available internal volume is found at the step 13110, the processor 830 searches an available external volume in the external volume management table 1200 (step 13150) and checks whether any access-control set external volume is available or not (step 13160).

If an available external volume is found, the processor 830 migrates data from the external volume to the available external volume found at the step 13160 (step 13170). Then, the processor 830 updates the access management table 12002 (step 13130) and updates the virtual volume attribute management table 1000, the internal volume management table 1100 and the external volume management table 1200 (step 13140) . Then, the access control change request program 13000 ends.

If no available external volume is found at the step 13160, the fact that the access control cannot be changed is notified to the requesting host computer or management computer (13190). Then, the access control change request program 13000 ends.

As an example in which the flow in Fig. 13 is executed, in response to a request for setting access control of the WWN "203" for V4 from the host computer 200 or the management computer 300, the storage subsystem 800 rewrites the access control table 12002 as shown in Fig. 12D so that the storage subsystem 800 can perform access control since the storage subsystem 800 has the access control system as a result of the step 13080.

On the other hand, since the storage subsystem 400 does not have the access control system as a result of the step 13080, accesses from interfaces having any WWNs are executed to the volume Y3 of the storage subsystem 400. This case can be addressed by migrating data from the external volume to the access-controllable storage subsystem 600 or 800 at the steps 13110 and 13120 in consideration of access control attributes as external volume attributes. According to this embodiment, access management and/or data management can be performed efficiently for a storage subsystem storing data in a virtualized environment.

### (Embodiment 2)

Fig. 9 shows a hardware configuration diagram of a management computer 300 according to Embodiment 2. The management computer 300 is different from the management computer 300 in Fig. 1 in that the management computer 300 has an attribute setting check program 900 in a disk drive. The rest is the same as the computer system in Fig. 1.

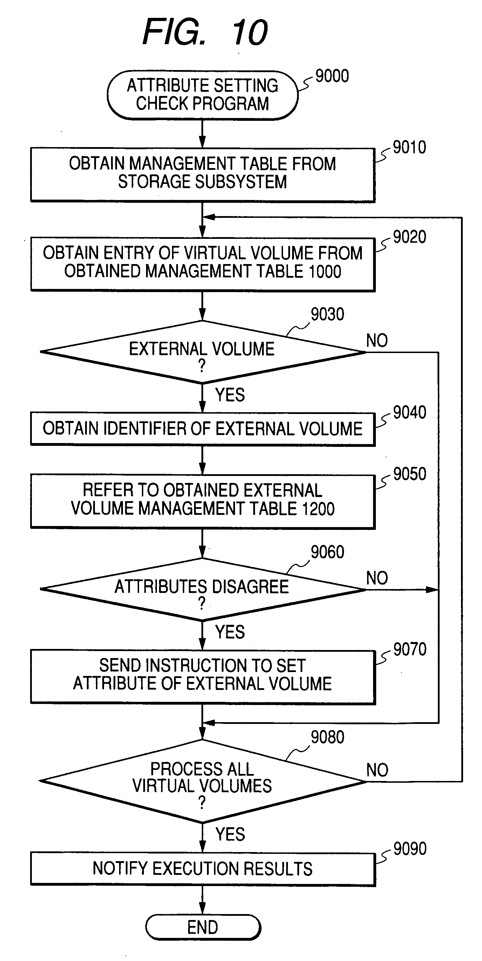

The management computer 300 regularly collects a virtual volume attribute management table 1000 and external volume management table 1200 stored in a non-volatile memory 840 of a storage subsystem 800 and a volume attribute management table 6000 stored in a non-volatile memory 650 of the storage subsystem 600 and checks the consistency in access attribute settings. The attribute setting check program will be described with reference to Fig. 10.

### (Details On Attribute Setting Check Program)

The attribute setting check processing 9000 is executed by a control unit of the management computer 300. The virtual volume attribute management table 1000 and external volume management table 1200 stored in the non-volatile memory 840 of the storage subsystem 800 and the volume attribute management table 6000 stored in the non-volatile memory 650 of the storage subsystem 600 are obtained (step 9010).

One of entries of a virtual volume stored in the virtual volume attribute management table 1000 obtained at the step 9010 is obtained (step 9020).

If the volume type of the entry of the virtual volume, which is obtained at the step 9020, is external, the external volume management table 1200 obtained at the step 9010 is referred. Then, an identifier of the external volume corresponding to the virtual volume obtained at the step 9010 is obtained (9040).

The volume attribute management table 6000 obtained at the step 9010 is referred, and the attribute of the external volume obtained at the step 9040 is obtained (step 9050).

If the attribute of the virtual volume obtained at the step 9020 and the attribute of the external volume obtained at the step 9050 do not agree, attribute change processing on the virtual volume is instructed to the storage subsystem 800 (9070). When the attributes for a virtual volume and an external volume do not correspond to each other for example, the same settings as the settings of the attributes of the virtual volume are defined for the storage subsystem 800. The storage subsystem 800 performs processing at the step 4040 and subsequent steps in Fig. 4.

If any unprocessed virtual volumes remain (step 9080), the processing from the step 9020 is repeated on the unprocessed virtual volumes.

If the virtual volume is not an external volume at the step 9030 and if any unprocessed virtual volumes remain at the step 9080, the processing from the step 9020 is repeated on the unprocessed virtual volumes.

If the attributes agree at the step 9060 and if any unprocessed virtual volumes remain at the step 9080, the processing from the step 9020 is repeated on the unprocessed virtual volumes.

When the processing is performed on all virtual volumes at the step 9080, the execution results are displayed on a display unit of the management computer 300 (step 9090) . Then, the processing ends.

The attribute change processing is instructed to the storage subsystem 800 having virtual volumes at the step 9070. However, the attribute change processing may be directly instructed to the storage subsystem 600 having external volumes.

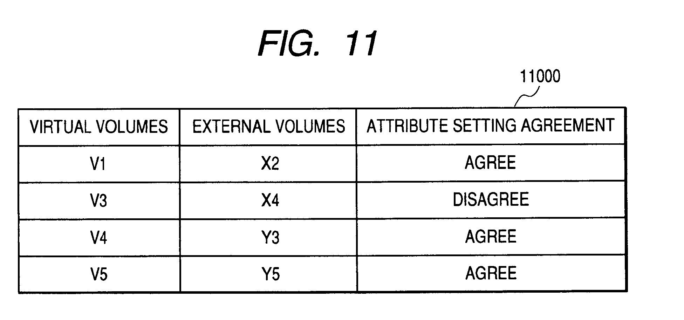

The management computer may repeat the steps 9010 to 9050 on each entry of a virtual volume. Then, a GUI indicating the agreement/disagreement between attributes of the virtual volume and the external volume may be created and be displayed on a display unit of the management computer. An example thereof is shown in Fig. 11.

Fig. 11 shows the GUI indicating the agreement/disagreement between attributes of volumes.

A virtual volume is a storage extent of the storage subsystem 800 to be provided to the computer. External volumes storing data, which corresponds thereto, are disk drives that the external storage subsystems 400 and 600 have and are volumes for storing data. The agreement/disagreement with respect to an obtained access attribute is displayed for each virtual volume that the storage subsystem 800 provides to the computer.

According to the above-described embodiment, the management computer can obtain multiple management tables and can obtain hierarchical information among storage subsystems and access attribute information of externally recognizable virtual volumes and volumes storing data corresponding thereto. Thus, access attributes more reflecting requests from computers can be managed.

In a computer system of a virtual storage environment with multiple storage subsystems, data tempering can be prevented, and the validity of evidence of data can be easily improved.

Note that to perform the processing according to this embodiment, any storage subsystem may obtain access attribute information from one or more storage subsystems holding external volumes corresponding to virtual volumes of the storage subsystem. Alternatively, a host computer may perform the processing.

According to the above-described various embodiments, access management and/or data management can be performed efficiently for a storage system storing data in a virtualized environment.

## Claims

1. A storage system comprising:
a first interface to be coupled to a computer via a network;
a second interface to be coupled to another storage system via the network, and
a control unit connected to said first interface and said second interface,
wherein the control unit receives a setting instruction for an attribute of a volume, which can be recognized by the computer, through the first interface and, if a data storing volume corresponding to the volume specified by the instruction for attribute setting is the other storage system, sends an instruction for setting the attribute of the data storing volume to the other storage system through the second interface.

2. A storage system according to Claim 1,
wherein the control unit judges whether or not an attribute of the data storing volume corresponding to the volume specified by the instruction for attribute setting can be defined to the attribute on the basis of the instructed one, and, sends the instruction for attribute setting to the other storage system if the same attribute can be defined as a result of the judgment.

3. A storage system according to Claim 1, wherein the instruction for attribute setting to the other storage systems is an instruction for the attribute setting on the basis of the instructed attribute.

4. A storage system according to Claim 2, the storage system further comprising an volume for storing data,
wherein the control unit, if the same attribute cannot be defined as a result of the judgment, migrates to a volume that the storage system itself has, data stored in the volume corresponding to the volume specified by the attribute setting instruction.

5. A storage system according to Claim 4, wherein the control unit stores data in a volume, and defines an attribute of the volume to the attribute specified in the instruction sent from the external apparatus.

6. A storage system according to Claim 1, wherein, when the attribute of the volume storing data corresponding to the volume specified by the attribute setting instruction cannot be defined to the attribute on the basis of the instructed one, the control unit sends an instruction to migrate data to other second storage system to the other storage systems through the second interface.

7. A storage system according to Claim 6, wherein the control unit judges the presence of the volume and sends an instruction to migrate the data through the second interface if none as a result of the judgment.

8. A storage system according to Claim 6, wherein the control unit sends to the other second storage system through the second interface the same attribute setting instruction on the basis of the received instruction.

9. A storage system according to Claim 1,
wherein attributes of the volume included in the received setting instruction has a selection of a volume subject to data write protection, setting of data write protection and a period with the setting of the, selection; and
an instruction for setting an attribute to be sent to the other storage system, has a selection of a volume storing data corresponding to the volume based on the selection, setting of data write protection and a period with the setting of the selection.

10. A storage system according to Claim 1,
wherein attributes of the volume have a selection of an external apparatus permitted to request for the volume.

11. A storage system according to Claim 10,
wherein the external apparatus is a computer or an other storage system;
a setting instruction received from the computer has a selection of a computer permitted to request for a volume identified by the computer; and
an attribute setting instruction to be sent to the other storage system has a selection of a volume corresponding to a volume identified by the computer and a setting to permit requests from the storage system itself.

12. A computer system comprising:
plurality of computers;
a first storage system having volumes, which can be recognized by the computers over a network;
and a second storage system having a volume storing data to be requested to input/output from the computers through the volumes which can be recognized by the computers;
wherein the computer sends to the first storage system an attribute setting instruction for the volumes which can be recognized by the computers,
wherein the first storage system receives the attribute setting instruction for the volume, which can be recognized by the computers, from the computer, judges whether or not a storage system storing data in an volume corresponding to the volume specified by the attribute setting instruction is the second storage system; and
sends an instruction for attribute setting to the other storage system if the storage system is the other storage system as a result of the judgment, and
wherein the second storage system sets an attribute for the volume storing data in response to the setting instruction.

13. A computer system according to Claim 12,
wherein the first storage system further has volume storing data to be used by the computer through the volume, which can be recognized by the computers, and migrates data stored in the volume of the second storage system to the volume storing data of the first storage system itself if a same attribute as the instructed one cannot be set for the volume storing data of the second storage system.

14. A computer system according to Claim 12, the computer system further comprising third storage system,
wherein the first storage system instructs the second storage system to migrate data stored in a volume of the second storage system to a volume of third second storage system,
when an attribute in accordance with a setting instruction from the computer cannot be set for the volume storing data of the second storage system.

15. A computer system according to Claim 12, the computer system further comprising a management computer connecting to the computers and the storage systems over a network,
wherein the first storage system associates a volume, which can be recognized by the computers, and the volume storing data, which is requested to input/output from the computer, and holds an attribute of the externally recognized volume,
wherein the second storage system holds an attribute of the volume storing data, which is requested to input/output from the computer,
wherein the management computer acquires the association and a first attribute of the externally recognized volume from the first storage system over the network and a second attribute of the volume storing data, which is requested to input/output from the computer, from the second storage system over the network; and compares the attribute of the volume, which can be recognized by the external apparatus, and the attribute of the volume storing data, which is requested to input/output from the computer, based on the acquired association and first and second attributes.

16. A volume attribute setting method to be performed in a storage system connected to a computer over a network and including a volume, which can be recognized by the computer, the method comprising the steps of:
receiving an instruction to set an attribute of a volume, which can be recognized by the computer, from the computer;
instructing the attribute setting to the second storage system over the network if a volume storing data corresponding to the volume specified by the attribute setting instruction is a second storage system.

17. A volume attribute setting method according to Claim 16, the method further comprising the steps of:
migrating the data to a volume of the storage system if the second storage system cannot set an attribute corresponding to the instructed; and
setting an attribute corresponding to the instructed one for a volume storing the migrated data.

18. A computer system, comprising:
a computer using data;
a Fibre Channel switch connected to the computer over a Fibre Channel network;
a first Fibre Channel interface connected to the computer through the Fibre Channel switch;
a second Fibre Channel interface connected to the other storage system;
a first processor;
a first storage system having at least one virtual volume, which can be recognized by the computer, and at least one volume corresponding to the virtual volume and storing data; and
a third Fibre Channel interface connected to the Fibre Channel switch and the first storage system;
a second processor;
a second storage system having a volume corresponding to the virtual volume and storing data;
a fourth Fibre Channel interface connected to the Fibre Channel switch and the first storage system;
a third processor; and
a third storage system having a volume storing data,
wherein the first processor:
receives a request for changing an attribute of a virtual volume from the computer through the first Fibre Channel interface;
judges whether a volume corresponding to the virtual volume exists in the first storage system or the second storage system;
if the volume is included in the second storage system as a result of the judgement, judges whether the same attribute as the attribute of the virtual volume can be set or not;
if the attribute can be set, instructs the attribute setting to the second storage system through the second interface;
if the attribute cannot be set, moves data stored in the volume corresponding to the virtual volume to a volume of the first storage system;
performs the attribute setting for the volume of the first storage system after the completion of the movement; and
if the attribute cannot be set and if the data cannot be moved to the volume of the first storage system, moves the data to the third storage system and gives an instruction to set the attribute through the Fibre Channel interface after the moved data is moved to the volume.
